# EUROPÄISCHE PATENTSCHRIFT

(11) **EP 2 951 045 B1**
(45) Veröffentlichungstag und Bekanntmachung des Hinweises auf die Patenterteilung: **15.03.2017**
(21) Anmeldenummer: 14700541.7
(22) Anmeldetag: 14.01.2014
(51) Int. Cl.: B60K 31/00, B60Q 9/00, B60T 7/22, B60W 30/06

(54) **VERFAHREN ZUM BETRIEB EINES PARKASSISTENZSYSTEMS UND KRAFTFAHRZEUG**
METHOD TO OPERATE A PARKING ASSISTANCE SYSTEM AND VEHICLE
METHODE POUR LA MISE EN OEUVRE D'UN SYSTEME D'ASSISTANCE AU PARCAGE ET VEHICULE

(30) Priorität: 29.01.2013 DE 102013001464
(43) Veröffentlichungstag der Anmeldung: 09.12.2015
(73) Patentinhaber: Audi AG, 85045 Ingolstadt (DE)
(72) Erfinder: LACHER, Peter, 85049 Ingolstadt (DE)
(74) Vertreter: Herbst, Matthias Heinz
(86) Internationale Anmeldenummer: PCT/EP2014/000068
(87) Internationale Veröffentlichungsnummer: WO 2014/117915

(56) Entgegenhaltungen:
- EP-A1- 1 470 977
- EP-A2- 1 102 226
- WO-A1-2008/065396
- WO-A1-2009/121534
- DE-A1-102005 061 909
- JP-A- 2006 298 195
- KR-A- 20090 040 024
- US-A1- 2009 289 813

## Beschreibung

Die Erfindung betrifft ein Verfahren zum Betrieb eines bei Unterschreitung eines Abstands zwischen einem Kraftfahrzeug und einem Objekt warnenden Parkassistenzsystems des Kraftfahrzeugs sowie ein Kraftfahrzeug mit einem solchen Parkassistenzsystem.

Parkassistenzsysteme sind in heutigen Kraftfahrzeugen inzwischen wohlbekannt, wobei eine bekannte Form eines Parkassistenzsystems bei langsamen Geschwindigkeiten des Kraftfahrzeugs über wenigstens einen geeigneten Umfeldsensor, beispielsweise einen Infrarotsensor oder einen Ultraschallsensor, einen Abstand zwischen einem Objekt und dem Kraftfahrzeug misst. Unterschreitet dieser Abstand einen bestimmten Wert, wird ein Warnsignal ausgegeben. Im einfachsten Fall wird häufig ein mit einer bestimmten Frequenz wiederholter Ton verwendet, wobei die Wiederholfrequenz steigt, je mehr man sich dem (in diesem Fall nächstgelegenen) Objekt annähert. Unterschiedliche Tonhöhen können für Objekte im Frontbereich und Objekte im Heckbereich des Kraftfahrzeugs verwendet werden. Es sind ferner Ausführungsformen bekannt, die auch mit einer optischen Darstellung der Umgebung des Kraftfahrzeugs arbeiten. Beispielsweise kann der Bereich hinter dem Kraftfahrzeug in verschiedene Unterbereiche, insbesondere vier Unterbereiche, unterteilt werden, für die optisch angezeigt wird, ob sich dort ein nahes Objekt befindet und, beispielsweise durch verschiedene Entfernungsstufen, wie nah das Kraftfahrzeug dem Objekt schon ist. Selbstverständlich sind auch andere Warnsignale denkbar.

Durch Nutzung solcher Parkassistenzsysteme, die häufig auch als Parkabstandswarner bezeichnet werden, ist ein Fahrer über Objekte im näheren Umfeld des Kraftfahrzeugs beim Einparkvorgang informiert und kann somit Beschädigungen des Kraftfahrzeugs verbessert vermeiden.

Zur Aktivierung eines solchen Parkassistenzsystem sind verschiedene Varianten bekannt, die auch ergänzend eingesetzt werden können. So wird häufig ein Parkassistenzsystem aktiviert, wenn der Rückwärtsgang des Kraftfahrzeugs eingelegt ist. Möglich ist es auch, das Parkassistenzsystem durch Betätigung eines Bedienelements, insbesondere einer Taste, im Innenraum des Kraftfahrzeugs zu aktivieren und gegebenenfalls auch wieder zu deaktivieren. Zur Deaktivierung ist in heutigen Kraftfahrzeugen vorgesehen, dass das Parkassistenzsystem bis zu einer gewissen Grenzgeschwindigkeit aktiv bleibt. Bei Überschreitung dieser Grenzgeschwindigkeit, beispielsweise 10 km/h, wird das Parkassistenzsystem automatisch deaktiviert.

Dies bringt jedoch Nachteile mit sich. Befindet sich der Fahrer mit seinem Kraftfahrzeug beispielsweise in einem großen Parkhaus mit großen Parkbereichen, aber engen Auf-/Abfahrten, ist das System in seinem Deaktivierungsverhalten nicht auf die Wünsche des Fahrers abgestimmt. Überschreitet der Fahrer innerhalb des Parkhauses die Grenzgeschwindigkeit, deaktiviert sich das Parkassistenzsystem automatisch und muss beispielsweise bei Erreichen einer engen Auf-/Abfahrt erneut manuell durch Betätigung des Bedienelements aktiviert werden, um möglichen Schäden am Kraftfahrzeug vorzubeugen.

Das Dokument US2009289813 A1 ist als nächstliegender Stand der Technik nach dem Oberbegriff des Anspruchs 1 zu sehen.

Der Erfindung liegt daher die Aufgabe zugrunde, ein Verfahren zum Betrieb eines derartigen Parkassistenzsystems (Parkabstandswarners) anzugeben, welches verbessert auf die Wünsche des Fahrers abgestimmt ist.

Zur Lösung dieser Aufgabe ist bei einem Verfahren der eingangs genannten Art erfindungsgemäß vorgesehen, dass wenigstens eine Umgebungsinformation, die angibt, ob sich das Kraftfahrzeug in einer einem Parkraum entsprechenden Umgebung bewegt, aus Umfelddaten des Kraftfahrzeugs ermittelt wird, wobei ein aktives Parkassistenzsystem bei Überschreitung einer Grenzgeschwindigkeit durch das Kraftfahrzeug unter Berücksichtigung der Umgebungsinformation nur deaktiviert wird, wenn sich das Kraftfahrzeug nicht in einem Parkraum befindet.

Weiterhin ist das übliche Kriterium vorgesehen, wonach zur automatischen Deaktivierung des Parkassistenzsystems überprüft wird, ob eine Grenzgeschwindigkeit überschritten ist. Die Erfüllung dieses bekannten, ersten Kriteriums ist nun jedoch nicht mehr ausreichend, um eine automatische Deaktivierung des Parkassistenzsystems herbeizuführen, nachdem ein zweites Kriterium zusätzlich betrachtet wird, worin überprüft wird, ob sich das Kraftfahrzeug einem Parkraum, beispielsweise einem Parkhaus oder einem engen Parkplatz, befindet. Nur dann, wenn dies nicht der Fall ist, gleichzeitig aber die die Grenzgeschwindigkeit überschreitende Geschwindigkeit des Kraftfahrzeugs vorliegt, findet eine automatische Deaktivierung statt. Selbstverständlich werden das erste und das zweite Kriterium bei aktivem Parkassistenzsystem zyklisch anhand aktueller Daten überprüft, so dass insbesondere bei Verlassen der einem Parkraum entsprechenden Umgebung durch das Kraftfahrzeug eine automatische Deaktivierung bei Überschreitung der Grenzgeschwindigkeit erfolgt. Das erfindungsgemäße Betriebsverfahren kann beispielsweise durch ein Steuergerät des Parkassistenzsystems durchgeführt werden.

Das verbesserte Parkassistenzsystem, welches durch die vorliegende Erfindung vorgeschlagen wird, bezieht mithin Umgebungsinformationen mit ein und verhindern, dass sich der Parkabstandswarner automatisch deaktiviert, solange sich das Kraftfahrzeug in einer als Parkraum klassifizierten Umgebung, beispielsweise einem Parkhaus, befindet. Wird mithin die Umgebung als Parkraum erkannt, wird die geschwindigkeitsbasierte Systemdeaktivierung verhindert. Auf diese Weise wird der Bedienkomfort im Kraftfahrzeug bei Fahrten innerhalb von Parkhäusern oder sonstigen Parkräumen erhöht. Gleichzeitig wird der Fahrer vor Parkschäden am Kraftfahrzeug geschützt, da das Parkassistenzsystem aktiviert bleibt, solange es gebraucht wird.

Dabei existieren mehrere Möglichkeiten, wie die Umgebungsinformation ermittelt werden kann, welche auch ergänzend verwendet werden können.

So kann zunächst vorgesehen sein, dass Umfelddaten wenigstens eines Umfeldsensors des Kraftfahrzeugs ausgewertet werden, insbesondere Umfelddaten einer Kamera. Dann kann beispielsweise eine Bildverarbeitungseinrichtung verwendet werden, welche von einer Kamera aufgenommene Bilder im Hinblick auf eine Befindlichkeit des Kraftfahrzeugs auf einem Parkplatz oder in einem Parkhaus, allgemein in einem Parkraum, hindeuten. Beispielsweise können typische Anzeichen von Parkraum - Parkmarkierungen, eine große Anzahl regelmäßig angeordneter Kraftfahrzeuge, typische Merkmale des Interieurs eines Parkhauses und dergleichen - im Rahmen einer Bildverarbeitung identifiziert und bewertet werden. Bekannte Verfahren zur Bildverarbeitung lassen sich entsprechend einsetzen. Denkbar ist es im Übrigen auch, Parkraum optisch oder durch andere Umfeldsensoren wahrnehmbar zu kennzeichnen, wobei dann die entsprechende Kennzeichnung in den Daten des Umfeldsensors detektiert wird.

In weiterer Ausgestaltung der Erfindung ist es denkbar, dass als Umfelddaten eine geodätische Position des Kraftfahrzeugs durch einen GPS-Sensor ermittelt und unter Verwendung von verzeichnetem Parkraum aufweisenden digitalen Kartendaten zu der Umgebungsinformation ausgewertet wird. Dies ist insbesondere vorteilhaft, wenn das Kraftfahrzeug ohnehin ein Navigationssystem aufweist, in welchem digitales Kartenmaterial, also digitale Kartendaten, vorhanden ist. Die digitalen Kartendaten werden dann letztlich ergänzt um bestimmten Bereichen zugeordnete Eigenschaften, die angeben, ob es sich um Parkraum handelt. Ist entsprechend über einen üblichen GPS-Sensor eine geodätische Position des Kraftfahrzeugs ermittelt worden, lässt sich auch bestimmen, ob sich das Kraftfahrzeug in einer als Parkraum klassifizierten Umgebung befindet.

Ferner ist es denkbar, dass die Umgebungsinformation aus mittels einer Kommunikationseinrichtung des Kraftfahrzeugs ermittelten Umfelddaten ermittelt wird, insbesondere durch eine Funkkommunikation erhaltenen Umfelddaten. Es wurde bereits vorgeschlagen, Kraftfahrzeuge mit Kommunikationseinrichtungen zu versehen, die insbesondere zur sogenannten car-tox-Kommunikation ausgebildet sind, insbesondere also auch mit Infrastrukturobjekten zugeordneten Kommunikationseinrichtungen kommunizieren können. Beispielsweise kann nun vorgesehen sein, dass dem Parkraum wenigstens eine Kommunikationseinrichtung zugeordnet ist, wobei bei Empfang des entsprechenden Signals durch die Kommunikationseinrichtung des Kraftfahrzeugs schlussgefolgert werden kann, dass sich das Kraftfahrzeug in einer einem Parkraum entsprechenden Umgebung befindet. Beispielsweise können hier auch WLAN-Netzwerke und dergleichen verwendet werden.

In weiterer Ausgestaltung des erfindungsgemäßen Verfahrens kann bei Vorliegen eines einen Deaktivierungswunsch des Fahrers durch Betätigung eines Bedienelements anzeigenden Signals eine Deaktivierung des Parkassistenzsystems erfolgen. Das bedeutet, durch die erfindungsgemäß erweiterte automatische Funktionalität wird die manuelle Bedienung des Parkassistenzsystems nicht beeinflusst. Benötigt der Fahrer das Parkassistenzsystem nicht oder empfindet er dessen Betrieb als störend, kann er es wie gewohnt mittels eines Bedienelements deaktivieren, unabhängig vom Vorliegen der diskutierten Kriterien.

Neben dem Verfahren betrifft die Erfindung auch ein Kraftfahrzeug, umfassend ein bei Unterschreitung eines Abstands zwischen dem Kraftfahrzeug und einem Objekt warnendes Parkassistenzsystem mit einem zur Durchführung des erfindungsgemäßen Verfahrens ausgebildeten Steuergerät. Sämtliche Ausführungen bezüglich des erfindungsgemäßen Verfahrens lassen sich analog auf das erfindungsgemäße Kraftfahrzeug übertragen, mit welchem mithin dieselben Vorteile erreicht werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan des erfindungsgemäßen Verfahrens, und
- Fig. 2: ein erfindungsgemäßes Kraftfahrzeug.

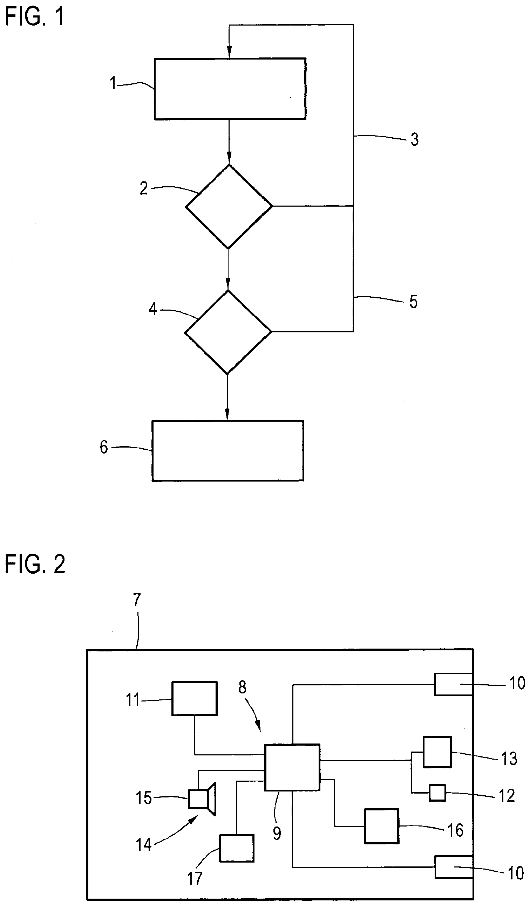

Das dargestellte Ausführungsbeispiel betrifft wie die vorliegende Erfindung den Betrieb eines Parkassistenzsystems, welches, gegebenenfalls in unterschiedlichen Bereichen, überprüft, ob ein bestimmter Abstand zwischen dem Kraftfahrzeug, in dem es verbaut ist, und einem Objekt unterschritten wird, wobei in diesem Fall eine Warnung bzw. ein Warnsignal ausgegeben wird, beispielsweise ein mit einer bestimmten Frequenz wiederholter Ton. Solche Parkassistenzsysteme werden häufig auch als Parkabstandswarner bezeichnet. Beim mit Hilfe von Fig. 1 dargestellten Betriebsverfahren geht es um die Frage, unter welchen Umständen das aktive Parkassistenzsystem automatisch deaktiviert wird.

Dazu werden zunächst in einem Schritt 1 Daten aufgenommen, nämlich zum einen Umfelddaten, zum anderen eine aktuelle Geschwindigkeit des Kraftfahrzeugs. Aus den Umfelddaten wird eine Umgebungsinformation ermittelt, die angibt, ob sich das Kraftfahrzeug in einer einem Parkraum entsprechenden Umgebung, beispielsweise einem Parkhaus oder einem Parkplatz, befindet.

In einem Schritt 2 wird ein erstes Kriterium überprüft, hier, ob die Umgebungsinformation anzeigt, dass sich das Kraftfahrzeug in einer einem Parkraum entsprechenden Umgebung befindet. Ist dies der Fall, Pfeil 3, wird eine Deaktivierung des Parkassistenzsystems ausgeschlossen und es erfolgt eine neue Datenaufnahme (Schritt 1) nach einer bestimmten Zeitspanne.

Befindet sich das Kraftfahrzeug nicht in einer als Parkraum klassifizierten Umgebung, wird der Schritt 4 durchgeführt, worin ein zweites Kriterium überprüft wird, vorliegend, ob die Geschwindigkeit des Kraftfahrzeugs unterhalb einer Grenzgeschwindigkeit, hier 10 km/h, liegt. Ist dies der Fall, Pfeil 5, erfolgt keine Deaktivierung des Parkassistenzsystem und es wird zur nächsten zyklischen Überprüfung mit Schritt 1 fortgefahren. Überschreitet das Kraftfahrzeug jedoch die Grenzgeschwindigkeit, wird in einem Schritt 6 das Parkassistenzsystem deaktiviert. Das bedeutet, nur dann, wenn beide Kriterien ein bestimmtes Ergebnis liefern, kann eine Deaktivierung wirklich erfolgen; dabei ist es im Übrigen unerheblich, welches der Kriterien als erstes und welches als zweites überprüft wird.

Die in Schritt 1 ermittelten Umfelddaten, die die Grundlage der Umgebungsinformation bilden und das Umfeld des Kraftfahrzeugs beschreiben, können auf verschiedene Weise ermittelt werden. So ist es denkbar, Umfeldsensoren, insbesondere eine Kamera, zu verwenden, und über eine Bildverarbeitung Informationen darüber zu gewinnen, ob man sich in einem Parkraum befindet. Möglich sind auch andere Sensoren, die Kennzeichnungen detektieren und dergleichen. Eine weitere Möglichkeit, die selbstverständlich auch zusätzlich vorgesehen sein kann und bevorzugt wird, ist die Verwendung eines GPS-Sensors, um eine geodätische Position des Kraftfahrzeugs zu ermitteln. Dann können digitale Kartendaten verwendet werden, in denen Positionen bzw. Bereichen eine Eigenschaft zugeordnet ist, die anzeigt, ob es sich um Parkraum handelt oder nicht. Vorteilhaft ist hierbei die Verknüpfung mit einem Navigationssystem. Eine dritte Möglichkeit ist die Verwendung von car-to-x-Kommunikation, wobei beispielsweise ein ortsfester Sender als Kommunikationseinrichtung, die dem Parkraum zugeordnet ist, verwendet werden kann.

Es sei ferner angemerkt, dass das Parkassistenzsystem unabhängig von dem hier dargestellten Vorgehen durch Betätigung eines Bedienelements aktivierbar und deaktivierbar sein kann.

Fig. 2 zeigt eine Prinzipskizze eines erfindungsgemäßen Kraftfahrzeugs 7. Dieses weist ein als Parkabstandswarner ausgebildetes Parkassistenzsystem 8 auf, welches über ein Steuergerät 9 betrieben wird, das zur Durchführung des erfindungsgemäßen Verfahrens ausgebildet ist. Das Parkassistenzsystem 8 nutzt Daten von Sensoren 10, von denen hier der Einfachheit halber nur zwei dargestellt sind, um eine Abstandsinformation zwischen dem Kraftfahrzeug und einem nächstgelegenen Objekt zu bestimmen, wobei bei Überschreitung eines bestimmten Abstands, also eines Grenzabstands, über eine akustische und/oder eine optische Ausgabeeinrichtung 11 ein Warnsignal ausgegeben wird, beispielsweise ein in seiner Frequenz gemäß des gemessenen Abstands veränderbarer Ton.

Wie bezüglich des erfindungsgemäßen Verfahrens und Fig. 1 dargelegt, kann eine automatische Deaktivierung des Parkassistenzsystems durch das Steuergerät 9 erfolgen, wozu Umfelddaten ausgewertet werden. Hierzu kann das Steuergerät 9 über einen Fahrzeugbus oder dergleichen mit einem GPS-Sensor 12, einem Navigationssystem 13, wenigstens einem Umfeldsensor 14, hier einer Kamera 15, und einer Kommunikationseinrichtung 16 zur car-to-x-Kommunikation, insbesondere nach dem WLAN-Standard, in Verbindung stehen.

Zusätzlich kann die Aktivierung und Deaktivierung des Parkassistenzsystems 8 auch über ein Bedienelement 17 erfolgen, welches hier als Taster ausgebildet ist.

## Patentansprüche

1. Verfahren zum Betrieb eines bei Unterschreitung eines Abstands zwischen einem Kraftfahrzeug (7) und einem Objekt warnenden, als Parkabstandswarner ausgebildeten Parkassistenzsystems (8) des Kraftfahrzeugs (7),
**dadurch gekennzeichnet,**
**dass** wenigstens eine Umgebungsinformation, die angibt, ob sich das Kraftfahrzeug (7) in einer einem Parkraum entsprechenden Umgebung bewegt, aus Umfelddaten des Kraftfahrzeugs (7) ermittelt wird, wobei ein aktiver Parkabstandswarner bei Überschreitung einer Grenzgeschwindigkeit durch das Kraftfahrzeug (7) unter Berücksichtigung der Umgebungsinformation nur deaktiviert wird, wenn sich das Kraftfahrzeug (7) nicht in einem Parkraum befindet.

2. Verfahren nach Anspruch 1,
**dadurch gekennzeichnet,**
**dass** Umfelddaten wenigstens eines Umfeldsensors (14) des Kraftfahrzeugs (7) ausgewertet werden, insbesondere Umfelddaten einer Kamera (15).

3. Verfahren nach Anspruch 1 oder 2,
**dadurch gekennzeichnet,**
**dass** als Umfelddaten eine geodätische Position des Kraftfahrzeugs (7) durch einen GPS-Sensor (12) ermittelt und unter Verwendung von verzeichneten Parkraum aufweisenden digitalen Kartendaten zu der Umgebungsinformation ausgewertet wird.

4. Verfahren nach einem der vorangehenden Ansprüche,
**dadurch gekennzeichnet,**
**dass** die Umgebungsinformation aus mittels einer Kommunikationseinrichtung (16) des Kraftfahrzeugs (7) ermittelten Umfelddaten ermittelt wird, insbesondere durch eine Funkkommunikation erhaltenen Umfelddaten.

5. Verfahren nach einem der vorangehenden Ansprüche,
**dadurch gekennzeichnet**,
bei Vorliegen eines einen Deaktivierungswunsch des Fahrers durch Betätigung eines Bedienelements (17) anzeigenden Signals eine Deaktivierung des Parkassistenzsystems (8) erfolgt.

6. Kraftfahrzeug (7), umfassend ein bei Unterschreitung eines Abstands zwischen dem Kraftfahrzeug (7) und einem Objekt warnendes, als Parkabstandswarner ausgebildetes Parkassistenzsystem (8) mit einem zur Durchführung eines Verfahrens nach einem der vorangehenden Ansprüche ausgebildeten Steuergerät (9).

## Claims

1. Method for operating a parking assistance system (8) of a motor vehicle (7), which system warns when a value falls below a distance between the motor vehicle (7) and an object and is constructed as a parking distance warning device,
**characterised in that**
at least one item of environmental information which indicates whether the motor vehicle (7) is moving in an environment which corresponds to a parking space is established from environmental data of the motor vehicle (7), wherein an active parking distance warning device when a limit speed is exceeded by the motor vehicle (7) taking into account the environmental information is deactivated only when the motor vehicle (7) is not located in a parking space.

2. Method according to claim 1,
**characterised in that**
environmental data of at least one environmental sensor (14) of the motor vehicle (7) are evaluated, in particular environmental data of a camera (15).

3. Method according to claim 1 or 2,
**characterised in that**
a geodetic position of the motor vehicle (7) is established as environmental data by means of a GPS sensor (12) and using digital map data which have a listed parking space is evaluated to form the environmental information.

4. Method according to any one of the preceding claims,
**characterised in that**
the environmental information is established from environmental data which are established by means of a communication device (16) of the motor vehicle (7), in particular by means of environmental data received by a radio communication.

5. Method according to any one of the preceding claims,
**characterised in that**,
when a signal is present that indicates a desire from the driver to deactivate by actuating an operating element (17), a deactivation of the parking assistance system (8) is carried out.

6. Motor vehicle (7) comprising a parking assistance system (8) which warns when a value falls below a distance between the motor vehicle (7) and an object and which is constructed as a parking distance warning device having a control device (9) which is constructed to carry out a method according to any one of the preceding claims.

## Revendications

1. Procédé servant à faire fonctionner un système d'aide au stationnement (8) d'un véhicule automobile (7), lequel système d'aide au stationnement est réalisé comme un avertisseur de distance de stationnement et émet un avertissement lorsqu'une distance entre un véhicule automobile (7) et un objet devient inférieure à une valeur limite,
**caractérisé en ce**
**qu'**est déterminée, à partir de données d'environnement du véhicule automobile (7), au moins une information d'environnement qui indique si le véhicule automobile (7) se déplace dans un environnement correspondant à un espace de stationnement, un avertisseur de distance de stationnement actif étant désactivé en tenant compte de l'information d'environnement lorsque le véhicule automobile (7) dépasse une vitesse limite seulement si le véhicule automobile (7) ne se trouve pas dans un espace de stationnement.

2. Procédé selon la revendication 1,
**caractérisé en ce**
**que** des données d'environnement d'au moins un capteur d'environnement (14) du véhicule automobile (7) sont analysées, en particulier des données d'environnement d'une caméra (15).

3. Procédé selon la revendication 1 ou 2,
**caractérisé en ce**
**qu'**une position géodésique du véhicule automobile (7) est déterminée en tant que données d'environnement par un capteur GPS (12) et est analysée pour obtenir l'information d'environnement en utilisant des données cartographiques numériques présentant un espace de stationnement dessiné.

4. Procédé selon l'une quelconque des revendications précédentes,
**caractérisé en ce**
**que** l'information d'environnement est déterminée à partir de données d'environnement déterminées au moyen d'un dispositif de communication (16) du véhicule automobile (7), en particulier à partir de données d'environnement obtenues par une communication radio.

5. Procédé selon l'une quelconque des revendications précédentes,
**caractérisé en ce**
**qu'**en présence d'un signal indiquant un souhait de désactivation du conducteur par l'actionnement d'un élément de commande (17), une désactivation du système d'aide au stationnement (8) est effectuée.

6. Véhicule automobile (7), comprenant un système d'aide au stationnement (8), qui est réalisé comme un avertisseur de distance de stationnement et qui émet un avertissement lorsqu'une distance entre le véhicule automobile (7) et un objet devient inférieure à une valeur limite, avec un appareil de commande (9) réalisé pour la mise en oeuvre d'un procédé selon l'une quelconque des revendications précédentes.
